# EUROPÄISCHE PATENTANMELDUNG

(11) **EP 4 091 981 A1**
(43) Veröffentlichungstag der Anmeldung: **23.11.2022**
(21) Anmeldenummer: 21175255.5
(22) Anmeldetag: 21.05.2021
(51) Int. Cl.: B66C 13/06, B65G 17/48

(54) **VORRICHTUNG ZUM HEBEN UND STABILISIEREN VON LASTEN**

(71) Anmelder: Siemens Aktiengesellschaft, 80333 München (DE)
(72) Erfinder: Schwank, Andreas, 65451 Kelsterbach (DE); Soter, Eric, 63456 Hanau (DE)

(57) **Zusammenfassung**

Die Erfindung betrifft eine Vorrichtung zum Heben und Stabilisieren von Lasten, insbesondere Gehänge für Fahrzeuge oder Fahrzeugteile, bestehend aus einem Rahmen (1) sowie einer darunter angeordneten, die Last aufnehmenden Traverse (2), die über an der Traverse (2) befestigte Hubmittel höhenverstellbar ist, und die mittels zumindest einer, im Wesentlichen in einer parallel zur Verfahrrichtung des Rahmens gedachten Vertikalebene diagonal verlaufender, einerseits am Rahmen und andererseits an der Traverse (2) verschwenkbar angelenkte Teleskopstrebe (3, 4) stabilisierbar ist, deren Länge zur Vermeidung eines lateralen Versatzes zwischen dem Rahmen (1) und der Traverse (2) während eines Hub- oder Senkvorgangs anpassbar ist. Dabei umfasst die Teleskopstrebe (3, 4) einen Aktuator (6) zur aktiven Längenänderung, wobei eine Steuerungseinrichtung vorgesehen ist zur Anpassung der Länge der Teleskopstrebe (3, 4) zumindest während einer Hub- oder Senkbewegung. Dadurch, dass die Teleskopstrebe synchron mit dem Hub bewegt wird, bildet sich immer ein stabilisierendes rechtwinkliges Dreieck, so dass eine Querschwingung verhindert wird und die gehobene Last auch bei mechanischen Arbeiten daran sicher fixiert ist.

## Beschreibung

Die Erfindung betrifft eine Anordnung mit gemäß dem Oberbegriff des Patentanspruchs 1.

Die Erfindung betrifft eine Vorrichtung zum Heben und Stabilisieren von Lasten, insbesondere Gehänge für Fahrzeuge oder Fahrzeugteile, bestehend aus einem Rahmen sowie einer darunter angeordneten, die Last aufnehmenden Traverse, die über an der Traverse befestigte Hubseile höhenverstellbar ist und die mittels zumindest einer Teleskopstrebe stabilisiert ist.

Derartige Vorrichtungen werden vor allem in der Automobilfertigung verwendet, um Fahrzeugteile oder das zu fertigende Fahrzeug in seiner jeweiligen Fertigungsstufe zwischen den einzelnen Montageorten zu transportieren. Der Rahmen ist zu diesem Zweck gewöhnlich an einer Schiene horizontal verfahrbar, die Traverse ist über die daran angelenkten Hubseile oder anderer Hubmittel (Ketten, Bänder oder dergleichen) mittels am Rahmen angeordneter Hubzüge höhenverstellbar.

Die Aufhängung der Last sollte, insbesondere wenn es sich um ein für die Montage bereitgestelltes Fahrzeug handelt, möglichst stabil sein, denn viele Montagevorgänge laufen voll automatisiert ab, wobei es auf eine genaue Positionierung der Tragvorrichtung ankommt, was wiederum eine möglichst stabile Aufhängung der Last an der Traverse erfordert. Da bloße Seiltriebe mit vertikalen Tragseilen nicht geeignet sind, das Pendeln der Last in allen Richtungen gleichermaßen sicher zu verhindern, werden neben den Seilverspannungen Knickarme oder Scheren eingesetzt, die einerseits am Rahmen und andrerseits an der Traverse angelenkt werden und die Last stabilisieren, ohne die Hub- und Senkbewegungen zu behindern.

Die zahlreichen bekannten Lösungen sind aufwendig, schwer und teuer. So wird in der deutschen Patentanmeldung DE 36 36 459 A1 eine gattungsbildende Vorrichtung zur Führung einer Last beschrieben, die gleichsam aus einem verfahrbaren Rahmen besteht, an dem eine Traverse höhenverstellbar angelenkt ist.

Zum Stabilisieren von fördertechnischen Baugruppen zum Heben und Senken von Lasten (sogenannte Hubzüge oder "Gehänge") werden häufig Teleskopstreben (kurz: Teleskope) eingesetzt. Dabei wird ein Innenrohr, das in einem Außenrohr verlagert ist, während der Hub- oder Senkbewegung ein- oder ausgefahren. Um Pendelbewegungen der Last in und entgegen der Verfahrrichtung des Rahmens zu vermeiden, sind dabei zwei solcher längenveränderbarer Teleskopstreben kreuzend zwischen Rahmen und Traverse vorgesehen, die in ihren Endbereichen einerseits an der Traverse und andererseits am Rahmen gelenkig befestigt sind und dazu dienen, die in Fahrtrichtung der Tragvorrichtung auftretenden Kräfte aufzunehmen.

Das Heben der Last erfolgt bei dieser Lösung über die Hubseile, die in den Eckbereichen der Traverse angelenkt sind und über Umlenkrollen in den Eckbereichen des Rahmens zu einem zentral auf dem Rahmen angeordneten Hubzug geführt sind. Zur Synchronisation der Ein- und Ausfahrbewegung der Teleskopstreben sind diese über einen Seilverbund aus Spannseilen stabilisiert und synchronisiert.

Solche Anordnungen mit seilbasierter Synchronisierung sind in DE 10 2004 045 516 A1 - Aßmann "Vorrichtung zum Heben und Stabilisieren von Lasten" offenbart, wobei eine die Bewegung der Teleskope synchronisierende Seilführung so gewählt ist, dass seitliche Pendelbewegungen gedämpft werden.

Aus dem beschriebenen Effekt der Seilverspannung ergeben sich beim geschilderten Stand der Technik Nachteile, beispielsweise weil durch die Seilführung durch die Schwenklager der Teleskopstreben eine ständige Ver- und Entdrillung der üblicherweise verwendeten Stahlseile und somit Seillängung und Verschleiß auftritt. Das Problem der Konstruktion bildet somit eine unerwünschte Längenänderung der Teleskopstreben infolge von in Traversenlängsrichtung angreifender Kräfte. Die Längung der Seile muss regelmäßig durch Nachspannen und regelmäßige Justierung ausgeglichen werden; gleiches gilt für Setzvorgänge, Schlupf und andere Abweichungen, die im Laufe der Zeit auftreten können. Zudem sind Montage, Justierung und Wartung nicht trivial und damit teuer und zeitaufwendig.

Es ist daher eine Aufgabe der vorliegenden Erfindung, eine konstruktiv einfache, funktionelle und wartungsarme Konstruktion für die Synchronisierung des Verfahrens der Teleskopstreben vorzuschlagen.

Es ist eine Kernidee der erfindungsgemäßen Lösung dieser Aufgabe, die Verspannung und Stabilisierung der Vorrichtung (Hubvorrichtung, Gehänge) mithilfe einer oder mehrerer aktiver Teleskopstreben, z.B. Teleskopspindeln, vorzunehmen.

Die Aufgabe wird insbesondere durch die Anordnung nach Patentanspruch 1 gelöst.

Dabei wird eine Vorrichtung zum Heben und Stabilisieren von Lasten vorgeschlagen, insbesondere Gehänge für Fahrzeuge oder Fahrzeugteile, bestehend aus einem Rahmen sowie einer darunter angeordneten, die Last aufnehmenden Traverse, die über an der Traverse befestigte Hubmittel höhenverstellbar ist, und die mittels zumindest einer, im Wesentlichen in einer parallel zur Verfahrrichtung des Rahmens gedachten Vertikalebene diagonal verlaufender, einerseits am Rahmen und andererseits an der Traverse verschwenkbar angelenkten Teleskopstrebe stabilisierbar ist, deren Länge zur Vermeidung eines lateralen Versatzes zwischen dem Rahmen und der Traverse während eines Hub- oder Senkvorgangs anpassbar ist. Dabei umfasst die Teleskopstrebe einen Aktuator zur aktiven Längenänderung - vorzugsweise einen Servoantrieb -, wobei eine Steuerungseinrichtung vorgesehen ist zur Anpassung der Länge der Teleskopstrebe zumindest während einer Hub- oder Senkbewegung. Dadurch, dass die Teleskopstrebe synchron mit dem Hub bewegt wird, bildet sich immer ein stabilisierendes rechtwinkliges Dreieck, so dass eine Querschwingung verhindert wird und die gehobene Last auch bei mechanischen Arbeiten daran sicher fixiert ist.

Vorteilhafte Ausgestaltungen der erfindungsgemäßen Teleskopstrebe sind in den abhängigen Patentansprüchen angegeben.

Die dabei beschriebenen Merkmale und deren Vorteile können sowohl einzeln als auch in sinnvoller Kombination miteinander realisiert werden.

Eine höhere Stabilität ergibt sich, wenn zur Stabilisierung zwei sich kreuzende und in der parallel zur Verfahrrichtung des Rahmens gedachten Vertikalebene diagonal angeordnete Teleskopstreben vorgesehen sind. Dabei wird vorteilhaft vorgesehen, dass die beiden Teleskopstreben derart angesteuert werden, dass ihre jeweiligen Längenänderungen im Wesentlichen synchron zueinander erfolgen.

In einer einfach zu realisierenden Ausführungsform umfasst die zumindest eine Teleskopstrebe als Aktuator zur aktiven Längenänderung eine mittels eines Motors angetriebene mechanische Stellvorrichtung, beispielsweise eine Spindel oder einen Schneckentrieb. Solche Antriebe, die auch Servoantrieb genannt werden, sind i.d.R. selbsthemmend, so dass auf eine ansonsten erforderliche Bremse für den stationären Zustand verzichtet werden kann. Alternativ können auch hydraulische Stellvorrichtungen, insbesondere Hydraulikzylinder, zur Realisierung der Teleskopstrebe(n) vorgesehen werden. Im Falle nur einer Teleskopstrebe muss dazu ein doppelt wirkender Hydraulikzylinder eingesetzt werden.

Vorteilhaft ist der Antrieb (Aktuator zur aktiven Längenänderung) als elektrischer Schrittmotor oder als elektrischer Linearantrieb ausgeführt bzw. umfasst einen solchen. Dabei kann oft auf eine Längenmesseinrichtung (z.B. Dreh-Encoder oder Linear-Encoder) in der Teleskopstrebe verzichtet werden. Der Schrittmotor bzw. Linearantrieb verfährt die Teleskopstrebe mit jedem Schritt um eine definierte Strecke (Länge), so dass analog zu einer Hubbewegung eine entsprechende Folge von Schritten angesteuert werden kann, um die Geometrie des sich ergebenden aussteifenden Dreiecks rechtwinklig zu erhalten bzw. eine Lateralbewegung der Traverse gegenüber dem Rahmen zu vermeiden. Insbesondere beim Einsatz von zwei sich kreuzenden Teleskopstreben ist eine Ausführung mit Schrittmotoren sinnvoll, weil bei einer synchronen Ansteuerung der Schrittmotoren die synchrone Bewegung der Teleskopstreben automatisch gegeben ist.

Vorteilhaft umfasst die Vorrichtung eine Messeinrichtung zur Messung eines lateralen Versatzes der Traverse zu dem Rahmen, wobei vorgesehen ist, dass bei Überschreiten eines vorgegebenen maximalen lateralen Versatzes die Länge der zumindest einen Teleskopstrebe zum Entgegenwirken des Versatzes verändert wird. Alternativ oder zusätzlich kann eine weitere Messeinrichtung zur kontinuierlichen Messung des Abstandes zwischen dem Rahmen und der Traverse oder zur Erfassung der Strecke und/oder der Geschwindigkeit einer Hub- bzw. Senkbewegung vorgesehen sein, womit dann eine Steuerung den dazu notwendigen Verfahrweges der zumindest einen Teleskopstrebe errechnen und die zumindest eine Teleskopstrebe passend ansteuern kann. Eine jeweils zur Vermeidung des lateralen Versatzes erforderliche Länge der zumindest einen Teleskopstrebe kann also anhand einer jeweiligen Hubhöhe eingestellt werden.

Vorteilhaft ist eine Steuerungseinrichtung zur Ansteuerung der Längenänderung der zumindest einen Teleskopstrebe vorgesehen. Im Falle des Einsatzes nur einer Teleskopstrebe wird dann einfach abhängig von der Richtung des Versatzes die Teleskopstrebe entsprechend ein- oder ausgefahren. Dazu kann insbesondere bei hohen Verfahrgeschwindigkeiten oder Präzisionserfordernissen ein Regelalgorithmus angewendet werden, z.B. ein PID-Regler. Im Falle von zwei sich kreuzenden Teleskopstreben kann für jede der Teleskopstreben eine Druck- und Zugbelastung erfasst werden. Im einfachsten Fall in Form einer Druckfeder bei einem der Anlenkpunkte, vorzugsweise an der unteren Traverse, wobei 2 Mikroschalter die Auslenkung der Feder überwachen und zur Unterscheidung der Zustände Druck - Neutral - Zug ausreichen. Falls bei einem Verfahren der Vorrichtung, also beim Heben oder Senken, beide Teleskopstreben auf Druck beansprucht werden, werden beide Teleskopstreben schrittweise oder kontinuierlich synchron eingefahren, bis zumindest eine Teleskopstrebe in den neutralen oder den Zug-Zustand übergeht. Die beidseitige Druckbeanspruchung geschieht naturgemäß zumeist beim Heben des Gehänges o.ä.. Das gesteuerte Nachführen ermöglicht es, dass die Teleskopstreben sich dem Hubvorgang automatisch anpassen, ohne dabei ihre Stabilisierungswirkung einzubüßen. Umgekehrt - und dieser Zustand wird zumeist bei einer Senkbewegung auftreten - werden im Falle einer gleichzeitigen Zugbeanspruchung beide Teleskopstreben synchron ausgefahren, bis zumindest eine der Teleskopstreben nicht mehr auf Zug belastet wird.

Selbstverständlich ist die Ausführung mit je 2 Mikroschaltern pro Messeinrichtung nur für eine binäre Regelung einsetzbar und daher mit entsprechenden Nachteilen (ruckweise Arbeitsweise, keine Anpassung der Geschwindigkeit etc.) verbunden. Analoge Druckaufnehmer - z.B. auf Halbleiterbasis, mit Dehnmessstreifen oder mittels FBG (Fiber Bragg Grating) - erlauben den Einsatz hochdynamischer Regelalgorithmen für das Verfahren der Teleskopstreben.

Ein Ausführungsbeispiel einer erfindungsgemäßen Teleskopstrebe wird nachfolgend anhand der Zeichnung erläutert.

Dabei zeigen:
- Figur 1: eine Seitenansicht (Schnittzeichnung) der abgesenkten Vorrichtung, und
- Figur 2: die Vorrichtung im eingefahrenen (gehobenen) Zustand.

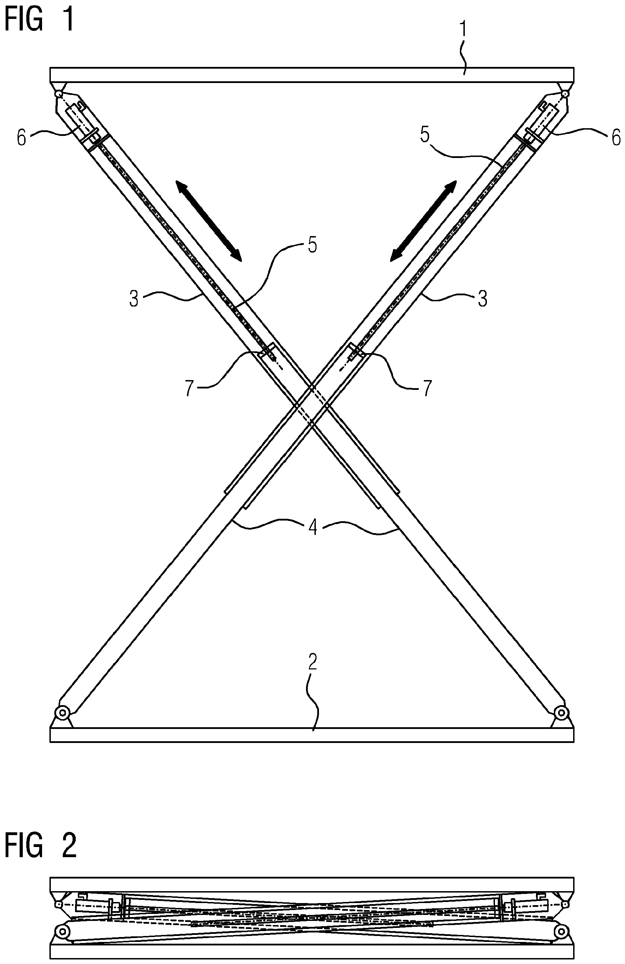

Die Figur 1 zeigt eine Anordnung (Hubzug), bei der als Hubmittel zwischen Oberrahmen 1 und Traverse 2 ("Unterrahmen") Seile oder Bänder (in der Figur 1 nicht gezeigt) zum Einsatz kommen. Insbesondere im abgesenkten Zustand müssen Querbewegungen (Schwingen) der unteren Traverse 2 verhindert werden. Figur 1 zeigt dazu eine Verspannung und Stabilisierung von kreuzförmig zwischen Oberrahmen 1 und Traverse 2 angeordneten Teleskopstreben; in einer einfachen Ausführungsform genügt jedoch eine der beiden dargestellten und in einem abgesenkten Zustand der Vorrichtung im Wesentlichen diagonal verlaufende aktive Teleskopstrebe (z.B. Teleskopspindel, doppeltwirkender Hydraulikzylinder o.ä.).

Das Prinzip der Erfindung beruht auf einer Verspannung und Stabilisierung der Teleskopstreben mit Hilfe von 2 Gewindespindeln 5.

In der Figur 1 ist eine Ausführungsform mit 2 Teleskopstreben in sich kreuzender Anordnung dargestellt; prinzipiell funktioniert die Anordnung jedoch auch mit nur einer Teleskopstrebe. Die Figur 1 zeigt dabei zwei Gewindespindeln 5, die von jeweils einem Aktuator (z.B. Getriebemotor oder Schrittmotor) zur aktiven Längenänderung 6 - im Folgenden als Servoantrieb bezeichnet - angetrieben werden. Die Servoantriebe 6 werden mit dem Hubantrieb synchronisiert. Die Position der Gewindespindeln 5 folgt immer dem entsprechenden Hub. Die Gewindespindeln 5 verbinden das Außenrohr 3 mit dem Innenrohr 4 jeweils formschlüssig. Die Spindelmutter 7 ist am Ende des Innenrohres 4 befestigt. Ein Synchronmotor 6 ist jeweils am oberen Ende des Außenrohrs 3 befestigt und mit der Gewindespindel 5 verbunden. Durch eine Drehbewegung der Gewindespindel 5 verfährt das Innenrohr 4 zum Außenrohr 3.

Die Figur 2 zeigt dieselbe Anordnung in einem "eingefahrenen" Zustand, d.h., dass die Traverse auf maximale Höhe verfahren ist und die Teleskopstreben sind maximal eingefahren. Bei beiden Figuren sind die Hubseile aus Gründen der Übersichtlichkeit nicht dargestellt.

Dadurch, dass die Teleskopstreben (kurz: Teleskope) synchron mit dem Hub bewegt werden, bildet sich immer ein stabilisierendes Dreieck zwischen Traverse 2, Teleskopstrebe 3, 4 und (nicht dargestelltem) Hubseil bzw. Rahmen 1, Teleskopstrebe 3, 4 und (nicht dargestelltem) Hubseil.

Die Stabilisierung mit nur einem Teleskop 3, 4 und Servoantrieb 6 ist auch möglich.

In einer vorteilhaften Ausgestaltung erfolgt die Führung des Innenrohrs im Außenrohr der Teleskopstrebe mit einfach zu fertigenden Gleitschuhen anstelle der sonst oft üblichen Rollen- oder Kugellager. Diese Gleitschuhe werden zur einfachen Montage von außen in entsprechende Öffnungen im Außenrohr gesteckt und führen das Innenrohr. Sie sind vorzugsweise aus einem Werkstoff mit guten Gleiteigenschaften, z. B. Kunststoff, hergestellt. Diese Ausführung ist wartungsarm. Durch die Montage von außen ist ein Nachstellen (beispielsweise durch Austausch von Distanzstücken zwischen dem Außenrohr und einer Anlagefläche der Gleitschuhe / Gleitstücke) bzw. ein Austausch der Gleitschuhe einfach möglich. Zudem ergibt sich ein spielfreier und leiser Lauf.

Durch die vorstehend beschriebene Konstruktion und ihren geschilderten Varianten werden mit Hilfe einer geeigneten Ansteuerung beide Innenrohre 3 sowohl beim Ein- als auch beim Ausfahren der Teleskopstreben synchron verfahren. Dies verhindert eine ungewünschte Längenänderung der Teleskopstreben infolge von in Traversenlängsrichtung angreifenden Kräften; die Konstruktion stabilisiert sich selbst und ein hin- und herschwingen, insbesondere im abgesenkten Zustand, der unteren Traverse wird gemindert bzw. verhindert.

## Patentansprüche

1. Vorrichtung zum Heben und Stabilisieren von Lasten, insbesondere Gehänge für Fahrzeuge oder Fahrzeugteile, bestehend aus einem Rahmen (1) sowie einer darunter angeordneten, die Last aufnehmenden Traverse (2), die über an der Traverse (2) befestigte Hubmittel höhenverstellbar ist, und die mittels zumindest einer, im Wesentlichen in einer parallel zur Verfahrrichtung des Rahmens gedachten Vertikalebene diagonal verlaufender, einerseits am Rahmen und andererseits an der Traverse (2) verschwenkbar angelenkte Teleskopstrebe (3, 4) stabilisierbar ist, deren Länge zur Vermeidung eines lateralen Versatzes zwischen dem Rahmen (1) und der Traverse (2) während eines Hub- oder Senkvorgangs anpassbar ist,
**dadurch gekennzeichnet,**
**dass** die Teleskopstrebe (3, 4) einen Aktuator (6) zur aktiven Längenänderung umfasst, und
**dass** eine Steuerungseinrichtung vorgesehen ist zur Anpassung der Länge der Teleskopstrebe (3, 4) zumindest während einer Hub- oder Senkbewegung.

2. Vorrichtung nach Patentanspruch 1,
**dadurch gekennzeichnet,**
**dass** zur Stabilisierung zwei sich kreuzende und in der parallel zur Verfahrrichtung des Rahmens (1) gedachten Vertikalebene diagonal angeordnete Teleskopstreben (3, 4) vorgesehen sind.

3. Vorrichtung nach Patentanspruch 2,
**dadurch gekennzeichnet,**
**dass** vorgesehen ist, dass die beiden Teleskopstreben (3, 4) derart angesteuert werden, dass ihre jeweiligen Längenänderungen im Wesentlichen synchron zueinander erfolgen.

4. Vorrichtung nach einem der vorhergehenden Patentansprüche,
**dadurch gekennzeichnet,**
**dass** die zumindest eine Teleskopstrebe (3, 4) eine mittels eines Motors (6) angetriebene mechanische Stellvorrichtung (5, 7) umfasst.

5. Vorrichtung nach Patentanspruch 4,
**dadurch gekennzeichnet,**
**dass** die mechanische Stellvorrichtung (5, 7) eine Spindel (5) oder einen Schneckentrieb umfasst.

6. Vorrichtung nach einem der Patentansprüche 4 oder 5,
**dadurch gekennzeichnet,**
**dass** der Motor (6) ein Schrittmotor ist.

7. Vorrichtung nach einem der vorhergehenden Patentansprüche,
**dadurch gekennzeichnet,**
**dass** die Vorrichtung eine Messeinrichtung zur Messung eines lateralen Versatzes der Traverse (2) zu dem Rahmen (1) umfasst, wobei vorgesehen ist, dass bei Überschreiten eines vorgegebenen maximalen lateralen Versatzes die Länge der zumindest einen Teleskopstrebe (3, 4) zum Entgegenwirken des Versatzes verändert wird.

8. Vorrichtung nach einem der Patentansprüche 1 bis 6,
**dadurch gekennzeichnet,**
**dass** vorgesehen ist, eine jeweils zur Vermeidung des lateralen Versatzes erforderliche Länge der zumindest einen Teleskopstrebe (3, 4) anhand einer jeweiligen Hubhöhe einzustellen.

9. Vorrichtung nach Patentanspruch 8,
**dadurch gekennzeichnet,**
**dass** die Vorrichtung eine Einrichtung zur Erfassung einer jeweiligen Hubhöhe der Vorrichtung umfasst.

10. Vorrichtung nach einem der vorhergehenden Patentansprüche,
**dadurch gekennzeichnet,**
**dass** die zumindest eine Teleskopstrebe (3, 4) eine Einrichtung zur Erfassung ihrer jeweiligen Länge umfasst.
